Europäisches Patentamt

European Patent Office

Office européen des brevets

(19)

(11) EP 1 283 476 A1

(12) EUROPEAN PATENT APPLICATION

(43) Date of publication:
**12.02.2003 Bulletin 2003/07**

(51) Int Cl.7: **G06F 17/27**

(21) Application number: **01890229.6**

(22) Date of filing: **08.08.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Sail Labs Technology AG**
**1040 Wien (AT)**

(72) Inventor: **Pfannerer, Norbert, Dipl. Ing.**
**1180 Wien (AT)**

(74) Representative: **Margotti, Herwig Franz**
**Kopetzky & Schwarz Patentanwälte**
**Wipplingerstrasse 32/22**
**1010 Wien (AT)**

(54) **A process for the automatic processing of natural languages**

(57) The present invention relates in general to the field of dialog systems. More particularly it relates to the automatic processing of natural languages, especially the parsing of sentences into syntactic or semantic structures. To find the parsetree, parsers use statistical models, e.g. models based on the principle of maximum entropy. The statistical model has to be trained with a lot of training data, which is wearisome and time-consuming, because training data must contain examples for every word that is expected to appear in the speech or text data during runtime of the system. The present invention provides a major enhancement to these systems as it allows the generation and use of classes of words instead of the words themselves. Thus, it enables the statistical models of the system to be updated dynamically and the parser to be made robust against input-errors or interference signals.

**Fig. 3**

EP 1 283 476 A1

**Description**

The present invention relates in general to the field of dialog systems. More particularly it relates to the field of automatic processing of natural languages, especially the parsing of sentences into syntactic or semantic structures.
Known processes for automatic processing of natural languages comprise:

inputting a word sequence from speech recognizing or text processing means,
constructing in a sequence of steps a plurality of parse-trees from the inputted word sequence, wherein each step comprises carrying out one action of a given set of actions, e.g. assigning a label or defining subtrees,
evaluating the probability of each parse-tree by means of a statistical model, which statistical model applies features, which are functions defined on the set of all possible actions and partial parse-trees, wherein the features are pre-built by the statistical model by applying feature templates to training data which comprise sentences marked up as correctly parsed trees,
selecting the parse-tree with the highest probability for further processing.

There are various statistical models which can be used to find the parse tree. One of these models is based on the principle of maximum entropy. The principle of maximum entropy is well known in the literature on statistical language processing. It allows various so-called features to be used to find the probability distributions. A feature in this context is a function defined on a partial parse tree that usually yields only 0 or 1 (binary feature), but sometimes other values are allowed.
For a deeper understanding of the principles of automatic processing of natural languages and their underlying statistical models the following references might be helpful:

1. Adwait Ratnaparkhi, Jeff Reynar, and Salim Roukos. 1994. A maximum entropy model for prepositional phrase attachement. In *Proceedings of the ARPA Human Language Technology Workshop,* pages 250-255.
2. Adwait Ratnaparkhi. 1996. A Maximum Entropy Part of Speech Tagger. In *Conference on Empirical Methods in Natural Language Processing,* University of Pennsylvania, May 17-18.
3. Adwait Ratnaparkhi. 1997. A Simple Introduction to Maximum Entropy Models for Natural Language Processing. Technical Report 97-08, Institute for Research in Cognitive Science, University of Pennsylvania.
4. Adwait Ratnaparkhi. 1997. A Linear Observed Time Statistical Parser Based on Maximum Entropy Models. In *Proceedings of EMNLP-97,* Providence, RI, USA.
5. Wojciech Skut, Thorsten Brants. 1998. A Maximum-Entropy Partial Parser for Unrestricted Text. *In Proceedings of the Sixth Workshop on Very Large Corpora, Montréal, Québec, 1998.* Computational Linguistics, Universität des Saarlandes, Germany.
6. Adam Berger. Convexity, Maximum Likelihood and All That. School of Computer Science, Carnegie Mellon University.

Explaining said statistical model based on maximum entropy in short, the parser builds a parse tree in a sequence of steps. Each step can be to assign a tag or label to a node, or to build a subtree. There are various ways in which this can be done, the essence of it being that a sequence of steps defines a tree. A partial sequence (up to a given point in time) defines a partial parse tree. All features are evaluated on partial parse trees.
At runtime, the probability model assigns a probability to each step. This probability is a conditional probability, conditioned on the partial tree (context) $p(s \mid context)$. The probability of the tree given a word sequence $< w >$ is therefore the product of all those conditional probabilities.

$$p(T \mid < w >) = \prod_i p(s_i \mid context_i)$$

The parser searches for the tree $T^*$ that has the maximal probability for the given word sequence.

$$T^* = \arg \max_T p(T \mid < w >)$$

During training this probability model is built using the features. Each feature is a function defined on the set of all possible steps and contexts (called $X$). The features are usually binary (values can only be 0 and 1) $f_1 : X \rightarrow \{0,1\}$,

but other values are sometimes allowed. In the training data the relative frequency of $f_1$ is counted, and may be denoted as $F_j$. The training algorithm finds the probability distribution with the maximal entropy

$$H(p) = -\sum_{x \in X} p(x) \log p(x)$$

that leaves the expectation values of the features constant

$$\sum_{x \in X} p(x) f_j(x) = F_j.$$

This algorithm therefore allows the use of a lot of features in a principled way, without special treatment that is dependent on the kind of the feature. State of the art is to use features that check the orthography of words (e.g. the whole word, a prefix or suffix of the word).

The statistical model needs to be trained, using a lot of training data. These data consist of sentences that are marked up as correctly parsed trees. The training takes a long time.

If words need to be added later, e.g. names, many sentences with the new words have to be added to the training data, and the model needs to be retrained. This is clearly a big problem when the parser is used in a dialog application, whose vocabulary is typically variable, with lists of names, etc. coming from databases. It is not easily possible to create the necessary training data and to retrain the parser with every database update, because training takes a long time, uses lots of memory, and, most importantly, creation of the necessary training data is a manual process that is often tedious and time consuming. An update of the parser's model should be as quick as possible and unattended.

Another problem of statistical systems in general is how to deal with unseen data, i.e. data that are not contained in the training set. In particular, errors in the input, like recognition errors, when the input comes from a speech recognizer; or typing errors when the input is typed in, can cause problems for the parser. The worst of these are spurious insertions at the beginning and the end of sentences, that can easily occur in spoken dialog systems over the telephone. These errors make the input appear to the parser very different from the training data.

The invention is based on the objective to solve the problems mentioned above, i.e. to allow words to be added to a parser at runtime without the need to retrain the model, and to make the parser more robust against unseen input, e.g. recognition errors, when the input comes from a speech recognizer; or typing errors when the input is typed in, especially errors in function words, or insertions at the beginning or the end of a sentence that often occur in the output of a speech recognizer.

The present invention is set out in claim 1. Preferred embodiments are set out in the depending claims.

The generation of classes of words which contain words with a corresponding context or of a certain type provides a major enhancement in automatic processing of natural languages, and particularly in the field of dialog systems, as it allows the statistical model to access classes of words instead of the words themselves in the features, which enables the models to be updated dynamically and the parser to be made robust against errors in the input.

In addition, reduced training time and reduction of memory consumption can be achieved, when the training data of said statistical model are set to contain sentences including the name of at least one of the generated classes. Preferably, classes are automatically generated from existing training data.

The process of the present invention can be applied to existing systems for the processing of natural language by modifying stored training data in such a way that words contained in a class are replaced with the name of the class.

It is known to build the features of a statistical model by running feature-generators that use simple feature templates, e.g. "Is the word to the left equal to x?". Here again the invention is useful to save training time and memory consumption by applying the feature templates to said classes.

Preferably, the list of words of each class is separately stored, e.g. in customer databases or article databases, which enables an operator or a computer system to dynamically update the members of one or more classes. The list of words of a class may even be dynamically changed during runtime of language processing, which renders the invention highly applicable to dialog systems. In particular, the list of words can be dynamically fetched from databases or processes operating on databases. In a further embodiment of the invention, words are allowed to be members of multiple classes.

In a preferred embodiment of the invention the statistical model is based on the principle of maximum entropy.

The invention is also applicable to systems for the processing of natural language, wherein the parse-tree is shallowed by grouping consecutive words to one term. The concept of such systems is sometimes called "Classing" in the literature, but must not be confused with the generation of classes according to the present invention. "Classing" according to the state of the art means to find simple entities that consist of one or a few words in a first step, and then to parse the "classed" sentence in a second step. As an example, in the sentence "I want to sell three thousand five hundred shares of Hypersoft Corporation" the words 'three thousand five hundred' can be replaced ("classed") by the number '3500'. Then the resulting sentence "I want to sell 3500 shares of Hypersoft Corporation" can be either parsed by a traditional parsing process or by applying the process according to the invention. In the latter case, a sentence "I want to sell [SHARES] of [STOCKS]" could be derived, wherein [SHARES] and [STOCKS] are the names of classes according to the present invention.

According to a further embodiment of the invention the parse-trees yield pairs of values, derived from the word sequence, and labels assigned thereto. Preferably, the labels used in the parse-trees are semantic labels.

As mentioned above, another problem in speech recognition and systems for the processing of natural languages in general is how to deal with unknown data, i.e. data that have not been contained in the training set. These unknown data may comprise input errors, like recognition errors, when the input comes from a speech recognizer, or typing errors when the input is typed in, but may also contain interference signals arising from technical shortcomings of the system or telecommunications lines, crosstalk, or poor signal/noise-ratio. In any case these unknown data can cause severe problems for the parser. The worst of these are spurious insertions at the beginning and the end of sentences, which can easily occur in spoken dialog systems over the telephone. These errors make the input of the parser to appear very different from the training data. The present invention copes with this problem by providing a special class X, to which all unknown words and interference signals are assigned by the system.

These and other optional features and advantages of the invention will be appreciated upon reading of the following description of the invention in conjunction with the attached drawings.

Reference is made to the drawings, wherein:

Fig. 1A is a training sentence as it would appear in the training module of a known system for automatic processing of natural language, and the resulting parse tree;

Fig. 1B is the training sentence of Fig. 1A modified by the invention, and the resulting parse tree;

Fig. 1C is the training sentence of Fig. 1A with a further modification according to the invention by introducing a class [SALUTATION], and the resulting parse tree;

Fig. 2A is another training sentence as it would appear in the training module of a known system for the automatic processing of natural language, and the resulting parse tree;

Fig. 2B is the training sentence of Fig. 2A modified by the invention, and the resulting parse tree;

Fig. 3 is another training sentence for the automatic processing of natural language, and the resulting parse tree, wherein the handling of unknown data or interference signals has been optimized by introducing a special class [X] for said data.

A preferred embodiment of the invention, which embodiment is based on an existing statistical parser using the principle of maximum entropy, will now be explained in detail. The training system of the parser uses as its training data a collection of sentences that are marked up as correct parse trees. Based on some simple feature templates (e. g. "is the word to the left equal to x?") the training module builds all features that fit the templates and actually occur in the training data.

To build the invention, the following steps need to be done:

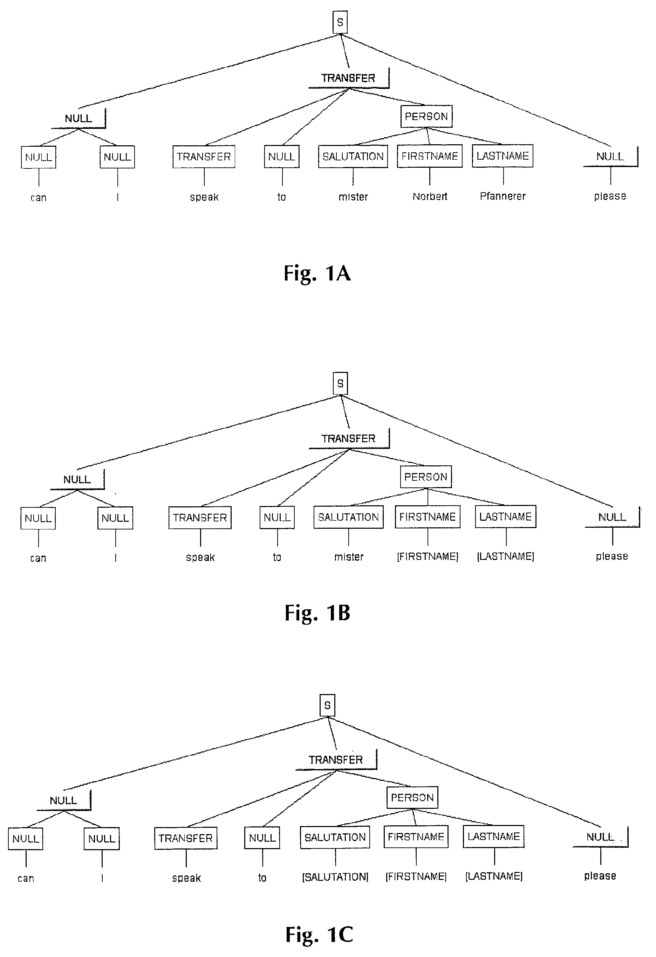

•    The training data is modified to contain the names of classes generated according to the invention, instead of the words themselves (see Figs.1A, 1B).

        For example, the sentence
can I speak to mister Norbert Pfannerer please
might be replaced by:
can I speak to mister [FIRSTNAME] [LASTNAME] please
without change to the parsetree structure.

        This process usually replaces lots of similar sentences by only one, hence dramatically reducing the necessary memory of a computer system.

- In the first phase in the training, the parser generates features that check for the class. I.e. any feature template that checks for a specific word is also applied to class names.
    For the above mentioned feature template, the parser will generate for example the features:

    *is the word to the left equal to "speak"*
    *is the word to the left equal to "to"*

    Without the use of classes also features like:
    *is the word to the left equal to "Norbert"*
        If the word "Norbert" does not appear elsewhere outside of a class, this feature will not be used after the training data is modified as described above.
    Additional features for the classes will be generated, e.g.:
    *is the word to the left member of "[FIRSTNAME]"*

- At runtime, such a feature will be active for all words that are part of the class. The list of words that are part of the class is stored separately, so words can be added to classes without the need to retrain the statistical model.
    The list of words that are part of a class can for example be stored as a plain text file, e.g.:

    [FIRSTNAME]
    Norbert
    Herwig
    [LASTNAME]
    Pfannerer
    Margotti

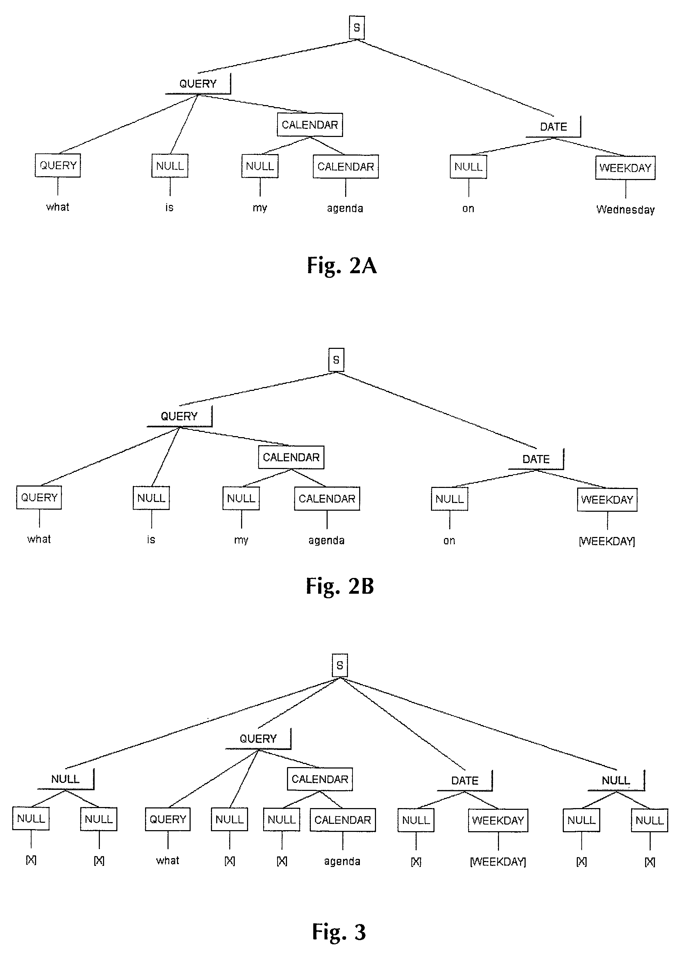

- It is also possible to use fixed classes that are not adapted to add words later on, for example a list of possible salutation forms, like the class [SALUTATION] in Fig. 1C, which class might contain the words 'Mister', 'Miss', 'Missis', or a list of all weekdays, as it is shown in Fig. 2B. This reduces the amount of training sentences, because without the generation of classes all sentences containing one of these words would have to be written individually for all words of the class. Therefore the necessary training time and the memory of the system is reduced.

Based on the inventive concept of a class model, the second part of the invention solves the problem of incorrect input, e.g. recognition errors.

- For this purpose, a special class, called [X] is used, to which all unknown data or signals are assigned.

- The runtime module of the language processing system automatically adds all new words, i.e. words that were not seen in the training data, to the class [X].

- The training data is augmented by adding additional sentences that contain the class [X] once or twice before or after the real text, to mimic insertions of the speech recognizer, as demonstrated in Fig. 3.

- Function words in the training data and other words that are irrelevant to the meaning of the sentences, or spurious insertion, e.g. interference signals due to shortcomings of telecommunication equipment, are replaced by the class [X].

This invention can not only be used when the input to the parser comes from a speech recognizer. Also typed input can be used, e.g. a typed dialog, maybe even through a web browser over the web.

The invention is not restricted to dialog systems, but can be used in any technical system where language or texts have to be analyzed. For instance, lists of names and typos can occur almost everywhere, and in each such cases the invention can be advantageous to automatically handle such errors and make technical systems more robust against them.

In addition, the invention is not limited to semantic parsing. Also for syntactic parsing these concepts can be used.

The main advantages of the invention can be summarized as follows:

- The invention allows the model of a maximum entropy parser to be dynamically updated, e.g. based on the contents of a database. This update can be done without manual intervention while the computer system is running, with only a very short downtime when the new parser model is brought online.

• The invention allows the training data of the parser to be structured to reduce the necessary training time and memory.

• The invention enables the parser to deal with unseen data, e.g. in the case of errors in the input.

**Claims**

1. A process for the automatic processing of natural languages, comprising
inputting a word sequence from speech recognizing or text processing means,
constructing in a sequence of steps a plurality of parse-trees from the inputted word sequence, wherein each step comprises carrying out one action of a given set of actions, e.g. assigning a label or defining subtrees,
evaluating the probability of each parse-tree by means of a statistical model, which statistical model applies features, which are functions defined on the set of all possible actions and partial parse-trees, wherein the features are pre-built by the statistical model by applying feature templates to training data which comprise sentences marked up as correctly parsed trees,
selecting the parse-tree with the highest probability for further processing,
**characterized in that** classes of words are generated which contain words with a corresponding context or of a certain type and **in that** the statistical model accesses these classes during runtime of the parsing process.

2. The process according to claim 1, wherein the training data of said statistical model contain sentences including the name of at least one of the generated classes.

3. The process according to claim 2, wherein classes are automatically generated from existing training data.

4. The process according to any of claims 2 or 3, wherein training data are modified by replacing words contained in a class with the name of the class.

5. The process according to any of claims 1 to 4, wherein the feature templates are applied to said classes.

6. The process according to any of claims 1 to 5, wherein the list of words of each class is stored separately.

7. The process according to any of claims 1 to 6, wherein words are members of multiple classes.

8. The process according to any of claims 1 to 7, wherein the list of words of a class is dynamically changed during runtime of the process.

9. The process according to claim 8, wherein the list of words is dynamically fetched from databases or processes operating on databases.

10. The process according to any of claims 1 to 9, wherein the statistical model is based on the principle of maximum entropy.

11. The process according to any of claims 1 to 10, wherein the parse-tree is shallowed by grouping consecutive words to one term.

12. The process according to any of claims 1 to 11, wherein the labels used in the parse-trees are semantic labels.

13. The process according to any of claims 1 to 12, wherein parse-trees yield pairs of values, derived from the word sequence, and labels assigned thereto.

14. The process according to any of claims 1 to 13, wherein a special class X is defined, to which all unknown words are assigned.

**Fig. 1A**

**Fig. 1B**

**Fig. 1C**

**Fig. 2A**

**Fig. 2B**

**Fig. 3**

**European Patent Office**

## EUROPEAN SEARCH REPORT

Application Number

EP 01 89 0229

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 00 73936 A (SEHDA INC) 7 December 2000 (2000-12-07) * page 6, line 7 - page 7, line 20 * | 1-4 | G06F17/27 |
| A | | 5-14 | |
| A | EP 0 525 470 A (IBM) 3 February 1993 (1993-02-03) * page 36, line 40 - page 39, line 16; figures 30,31; tables 4,5 * | 1 | |
| A | EP 0 853 286 A (SHARP KK) 15 July 1998 (1998-07-15) * page 2, column 17 - page 3, column 22 * | 1 | |

**TECHNICAL FIELDS SEARCHED** (Int.Cl.7)

G06F

The present search report has been drawn up for all claims

| Place of search | Date of completion of the search | Examiner |
|---|---|---|
| BERLIN | 13 March 2002 | Schmidt, A |

EPO FORM 1503 03.82 (P04C01)

**ANNEX TO THE EUROPEAN SEARCH REPORT
ON EUROPEAN PATENT APPLICATION NO.**

EP 01 89 0229

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2002

| Patent document cited in search report | | Publication date | Patent family member(s) | | Publication date |
|---|---|---|---|---|---|
| WO 0073936 | A | 07-12-2000 | AU | 5451800 A | 18-12-2000 |
| | | | WO | 0073936 A1 | 07-12-2000 |
| EP 0525470 | A | 03-02-1993 | US | 5477451 A | 19-12-1995 |
| | | | CA | 2068780 A1 | 26-01-1993 |
| | | | DE | 69230871 D1 | 11-05-2000 |
| | | | EP | 0525470 A2 | 03-02-1993 |
| | | | JP | 5189481 A | 30-07-1993 |
| | | | US | 5805832 A | 08-09-1998 |
| | | | US | 5768603 A | 16-06-1998 |
| EP 0853286 | A | 15-07-1998 | GB | 2321117 A | 15-07-1998 |
| | | | EP | 0853286 A1 | 15-07-1998 |
| | | | JP | 10198681 A | 31-07-1998 |

EPO FORM P0459

For more details about this annex : see Official Journal of the European Patent Office, No. 12/82